# FASCICULE DE BREVET EUROPEEN

(11) **EP 0 778 427 B1**
(45) Date de publication et mention de la délivrance du brevet: **06.06.2001**
(21) Numéro de dépôt: 96119074.1
(22) Date de dépôt: 28.11.1996
(51) Int. Cl.: F16F 15/123, F16F 15/129

(54) **Dispositif amortisseur de torsion, notamment pour véhicule automobile**
Drehschwingungsdämpfer,insbesondere für Kraftfahrzeuge
Torsional damping apparatus, especially for motor vehicles

(30) Priorité: 04.12.1995 FR 9514300
(43) Date de publication de la demande: 11.06.1997
(73) Titulaire: VALEO, 75017 Paris (FR)
(72) Inventeur: Lebas, Gilles, 93400 Saint-Ouen (FR); Lefevre, Gérard, 80480 Saleux (FR)
(74) Mandataire: Gamonal, Didier

(56) Documents cités:
- DE-A- 4 417 660
- FR-A- 2 628 808
- FR-A- 2 646 692
- FR-A- 2 674 592

## Description

La présente invention concerne un dispositif amortisseur de torsion disposé entre deux éléments tournants, à savoir, un élément d'entrée et un élément de sortie, ledit dispositif comprenant, d'une part, un amortisseur principal, ayant des organes élastiques à action circonférentielle, et étant attaqué cinématiquement directement par l'élément d'entrée, et, d'autre part, un préamortisseur, ayant des organes élastiques à action circonférentielle, et étant placé directement en amont de l'élément de sortie constitué d'un moyeu, dans lequel l'amortisseur principal comporte deux rondelles de guidage disposées axialement de part et d'autre d'un voile, les organes élastiques à action circonférentielle associés audit amortisseur principal agissant entre les deux rondelles de guidage et le voile qu'elles encadrent, en étant placés dans des logements en regard que présentent les rondelles de guidage et le voile, les organes élastiques à action circonférentielle du préamortisseur étant moins raides que ceux de l'amortisseur principal et agissant entre le voile et le moyeu, dans lequel les deux amortisseurs comportent chacun un dispositif de frottement à action axiale associé à leurs organes élastiques respectifs, ledit voile engrenant avec jeu circonférentiel avec la périphérie d'un voile de moyeu.

Un tel dispositif est par exemple décrit dans le document FR-A-2 628 808, conforme au préambule de la revendication 1.

Selon ce document, les dispositifs de frottement associés à l'amortisseur principal et au préamortisseur sont constitués de deux rondelles de frottement associées chacune à une rondelle Belleville les sollicitant axialement ; ces deux rondelles de frottement sont solidaires en rotation de la rondelle de guidage sur laquelle prennent appui lesdites rondelles Belleville et, pour ce faire, les rondelles de frottement présentent des moyens d'entraînement comme une partie axiale en forme de manchon avec lunules ou en forme de pattes.

La présente invention a pour objet un dispositif amortisseur de torsion du type ci-dessus dans lequel le nombre de pièces est réduit et celles-ci sont simplifiées.

Ainsi, selon l'invention un dispositif amortisseur de torsion disposé entre deux éléments tournants, à savoir, un élément d'entrée et un élément de sortie, ledit dispositif comprenant, d'une part, un amortisseur principal, ayant des organes élastiques à action circonférentielle, et étant attaqué cinématiquement directement par l'élément d'entrée, et, d'autre part, un préamortisseur, ayant des organes élastiques à action circonférentielle, et étant placé directement en amont de l'élément de sortie constitué d'un moyeu, dans lequel l'amortisseur principal comporte deux rondelles de guidage, disposées axialement de part et d'autre d'un voile, les organes élastiques à action circonférentielle associés audit amortisseur principal agissant entre les deux rondelles de guidage et le voile qu'elles encadrent, en étant placés dans des logements en regard que présentent les rondelles de guidage et le voile, les organes élastiques à action circonférentielle du préamortisseur, agissant entre le voile et le moyeu, étant moins raides que ceux de l'amortisseur principal, et dans lequel les deux amortisseurs comportent chacun un dispositif de frottement à action axiale associé à leurs organes élastiques respectifs, ledit voile présentant à sa périphérie interne des cannelures internes engrenant avec jeu circonférentiel avec des cannelures extérieures prévues à la périphérie d'un voile de moyeu que présente le moyeu à sa périphérie externe, lesdits dispositifs de frottement comportant une seule pièce comprenant une première rondelle de frottement, entourant une seconde rondelle de frottement, caractérisé par le fait que les première et seconde rondelles de frottement sont reliées par des bras radiaux souples axialement en sorte que les rondelles de frottement sont solidaires en rotation tout en étant déplaçables axialement l'une par rapport à l'autre.

Avantageusement, la première rondelle de frottement est disposée axialement entre une rondelle de guidage et le voile, et la seconde rondelle de frottement est disposée axialement entre ladite rondelle de guidage et le voile de moyeu, les deux rondelles de frottement étant chacune sollicitées élastiquement vers le voile et le voile de moyeu, respectivement.

De préférence, la première rondelle de frottement est munie de tétons axiaux logés dans des passages complémentaires de la rondelle de guidage qui lui fait face, et est sollicitée axialement en direction du voile par une rondelle Belleville qui prend appui sur ladite rondelle de guidage.

De préférence, la seconde rondelle de frottement est sollicitée axialement en direction du voile de moyeu par une rondelle élastique à action axiale, telle qu'une rondelle Belleville, qui prend appui sur ladite rondelle de guidage.

En variante, la seconde rondelle de frottement est sollicitée axialement en direction du voile de moyeu par mise en contrainte des bras radiaux.

Avantageusement, la rondelle de guidage placée de l'autre côté du voile par rapport à la pièce constituant les dispositifs de frottement est centrée par l'intermédiaire d'un palier, une portée cylindrique de la rondelle de guidage coopérant avec une portée cylindrique complémentaire que présente le palier et qui entoure le moyeu.

De préférence, le palier est muni de tétons axiaux logés dans des passages complémentaires de ladite rondelle de guidage et comporte une face de portée annulaire prenant appui sur le voile.

Ainsi qu'on l'aura compris, on réduit le nombre de pièces, on simplifie et on rigidifie la rondelle de guidage concernée puisqu'il est prévu seulement des passages associés à la première rondelle de frottement.

La solution est donc simple et économique, la pièce formant première et seconde rondelle de frottement étant avantageusement en matière moulable.

Dans une forme de réalisation les organes élastiques du préamortisseur sont placés dans des échancrures radialement en regard que présentent ledit voile et ledit voile de moyeu respectivement à leur périphérie interne et externe.

Cette solution est très compacte axialement au niveau de la périphérie externe du moyeu.

En outre, on peut réduire le nombre de pièce puisque le palier distinct de la pièce à bras axialement souples selon l'invention, peut servir à centrer le voile par rapport aux rondelles de guidage comme décrit dans le document FR-A-2 646 692 ou dans le brevet américain US-A-4,883,156.

En variante, comme décrit dans ces documents précités le préamortisseur peut être implanté axialement de l'autre côté du voile par rapport à la pièce unique de frottement selon l'invention. Le préamortisseur est alors implanté axialement entre le voile et la rondelle de guidage concernée en étant implanté radialement en dessous des organes élastiques de l'amortisseur principal.

Dans ce cas le préamortisseur comporte deux rondelles de guidage secondaires disposées de part et d'autre d'un voile secondaire, les organes élastiques du préamortisseur agissant entre le voile de l'amortisseur principal et le moyeu en étant montés dans des fenêtres pratiquées en vis-à-vis dans le voile secondaire et les rondelles de guidage secondaires.

Le voile secondaire peut être lié en rotation au moyeu, tandis que les rondelles de guidage secondaires peuvent être liées en rotation au voile de l'amortisseur principal. On peut inverser les structures.

Pour plus de précisions on se rapportera aux documents FR-A-2 628 808 et US-A-4,883,156, sachant que la présence de la rondelle entretoise n'est pas indispensable l'une des rondelles de guidage secondaire, dans ce cas solidaire de l'autre rondelle de guidage par exemple grâce à des entretoises, portant des pions engagées dans des ouvertures complémentaires du voile pour liaison en rotation avec celui-ci.

Dans toutes les réalisations le voile présente à sa périphérie interne des cannelures internes engrenant avec jeu circonférentiel avec des échancrures extérieures prévues à la périphérie externe d'un voile de moyeu, que présente le moyeu à sa périphérie externe.

Les cannelures extérieures du voile de moyeu sont interrompues ou pas par les échancrures de logement des organes élastiques du préamortisseur.

Pour mieux faire comprendre l'objet de l'invention, on va en décrire maintenant, à titre d'exemple, purement illustratif et non limitatif, un mode de réalisation représenté sur les dessins annexés.

Sur ces dessins :
- la figure 1 est une vue en coupe d'un dispositif amortisseur de torsion selon l'invention ;
- la figure 2 est une vue partielle de la figure 1 à plus grande échelle ;
- la figure 3 est une vue partielle en plan montrant le montage à engrènement du voile et du voile de moyeu du dispositif des figures 1 et 2 ;
- la figure 4 est une vue en plan de la pièce de frottement selon l'invention ;
- la figure 5 est analogue à la figure 2, à plus petite échelle, et correspond à une variante ;
- la figure 6 est une vue en coupe de la pièce de frottement de la variante de la figure 5.

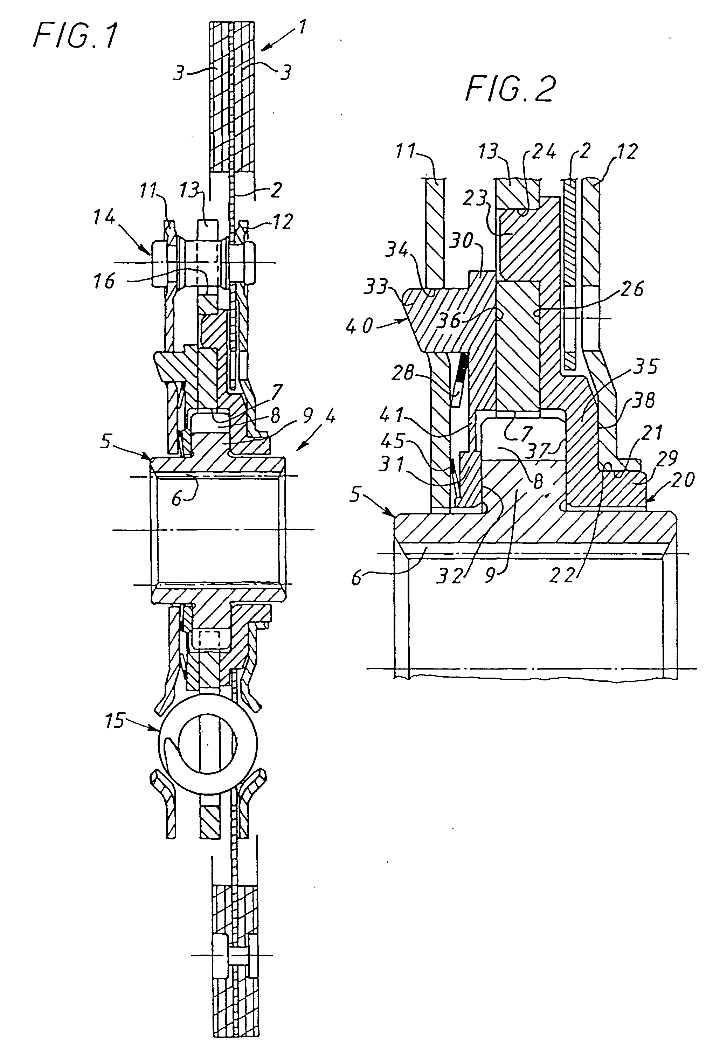

En se reportant à la figure 1, on voit un amortisseur principal comportant un élément d'entrée 1 solidaire de deux rondelles de guidage 11 et 12 disposées de part et d'autre d'un voile 13. Les rondelles de guidage 11 et 12 sont reliées entre elles par des entretoises 14 qui les solidarisent. Des organes élastiques 15 à action circonférentielle, ici des ressorts hélicoïdaux, accouplent élastiquement le voile 13 aux rondelles de guidage 11 et 12.

L'élément d'entrée 1 consiste, dans ce cas d'application à une friction d'embrayage, en un disque support 2 sur chacune des faces duquel sont fixées des garnitures de frottement 3 destinées à être serrées entre les plateaux de pression et de réaction de l'embrayage.

Le disque support 2 de garnitures de frottement 3 est accolé à la rondelle de guidage 12 de l'amortisseur principal en étant fixé à celle-ci par les entretoises 14 ; selon une variante non représentée, le disque support 2 est fixé à la rondelle de guidage 12 par des rivets spécifiques.

Les entretoises 14 traversent des ouvertures 16 en forme d'échancrures ménagées à la périphérie externe du voile 13 ; la limitation du débattement angulaire entre le voile 13 et les rondelles de guidage 11 et 12 est réalisée par coopération des entretoises 14 avec le bord des ouvertures 16.

Les rondelles de guidage 11 et 12 entourent l'élément de sortie 4 du dispositif amortisseur constitué d'un moyeu 5 cannelé intérieurement en 6 pour sa liaison en rotation ici à l'arbre d'entrée de la boîte de vitesses; il en est de même du voile 13 de l'amortisseur principal présentant à sa périphérie interne des cannelures internes 7 engrenant avec jeu circonférentiel avec des cannelures extérieures 8 prévues à la périphérie externe d'un voile de moyeu 9 solidaire du moyeu 5, pour formation de moyens d'engrènement à jeu intervenant entre le voile 13 et le moyeu 5 ; le voile de moyeu 9 forme une bride à la périphérie externe du moyeu 5 en étant d'un seul tenant avec lui.

Le préamortisseur est implanté radialement en dessous des ressorts 15 de l'amortisseur principal.

Le préamortisseur comprend le voile 13 de l'amortisseur principal et le voile de moyeu 9 du moyeu 5 ; des organes élastiques 25 à action circonférentielle, ici des ressorts hélicoïdaux, accouplent élastiquement le voile 13 de l'amortisseur principal au voile de moyeu 9 : à cet effet, ces deux voiles 13 et 9 présentent à leur périphérie interne, d'une part, et externe, d'autre part, des échancrures 17 et 27 qui se font face radialement et dans lesquelles sont placés les ressorts hélicoïdaux 25 ; dans l'exemple représenté, le préamortisseur comprend deux ressorts hélicoïdaux 25 disposés de manière diamétralement opposée ; les ressorts 25 sont moins raides que les ressorts 15 de l'amortisseur principal ; avantageusement, des cuvettes de centrage et d'appui 18, 19 sont prévues à chaque extrémité des ressorts 25. Les moyens d'engrènement à jeu 7, 8 sont interrompus par les échancrures 17 et 27.

Le préamortisseur est adapté à filtrer les vibrations dans le domaine de ralenti du moteur, tandis que l'amortisseur principal est adapté à filtrer les vibrations dans le domaine de marche normale du véhicule, dit domaine de roulage. Les amortisseurs comportent des dispositifs de frottement à action axiale décrits ci-dessous.

La rondelle de guidage 12 est centrée un palier 20 à faible coefficient de frottement, ici en matière plastique moulable ; une portée cylindrique 21 interne de la rondelle de guidage 12 coopère avec une portée cylindrique complémentaire 22 que présente le palier 20 et qui entoure, ici à jeu radial, le moyeu 5 ; la portée cylindrique externe complémentaire 22 du palier 20 est constituée par la face externe d'un manchon axial 29 qui prolonge axialement la bordure interne d'une couronne 35 s'étendant transversalement dont les faces coopèrent l'une, la face 37, avec le voile de moyeu 9 et l'autre, la face 38, avec la rondelle de guidage 12 ; la couronne 35 du palier 20 est prolongée à sa périphérie par un flasque 39 s'étendant parallèlement à la couronne 35 en étant décalé axialement par rapport à elle ; le flasque 39 du palier 20 est muni de tétons axiaux 23 logés dans des passages complémentaires 24 du voile 13 en sorte que celui-ci et le palier 20 sont solidaires en rotation et centrés l'un par rapport à l'autre ; le flasque 39 du palier 20 comporte, du côté qui fait face au voile 13, une face de portée annulaire 26 destinée à prendre appui sur le voile 13 dans sa partie centrale non affectée par les cannelures internes 7.

Une rondelle de frottement 30 est disposée axialement entre la rondelle de guidage 11 et le voile 13 ; la rondelle de frottement 30 présente une face de portée annulaire 36 destinée à coopérer en frottement avec le voile 13 dans sa partie centrale non affectée par les cannelures internes 7 ; la rondelle de frottement 30 est munie de tétons axiaux 33 logés dans des passages complémentaires 34 de la rondelle de guidage 11 en sorte que celle-ci et la rondelle de frottement 30 sont solidaires en rotation.

La rondelle de frottement 30 est sollicitée axialement en direction du voile 13 par une rondelle Belleville 28 qui prend appui sur la rondelle de guidage 11, sollicitant ainsi par réaction le palier 20 au contact du voile 13 et du voile de moyeu 9 et la rondelle de guidage 12 au contact de la face 38 du palier 20.

Placées, d'une part, axialement entre la rondelle de guidage 11 et le voile de moyeu 9 et, d'autre part, radialement entre la rondelle de frottement 30 et le corps du moyeu 5, est disposée une seconde rondelle de frottement 31 qui entoure le moyeu 5 et présente une face de portée annulaire 32 destinée à coopérer en frottement avec le voile de moyeu 9.

Une rondelle Belleville 45 sollicite axialement la seconde rondelle de frottement 31 vers le voile de moyeu 9 en prenant appui sur la rondelle de guidage 11.

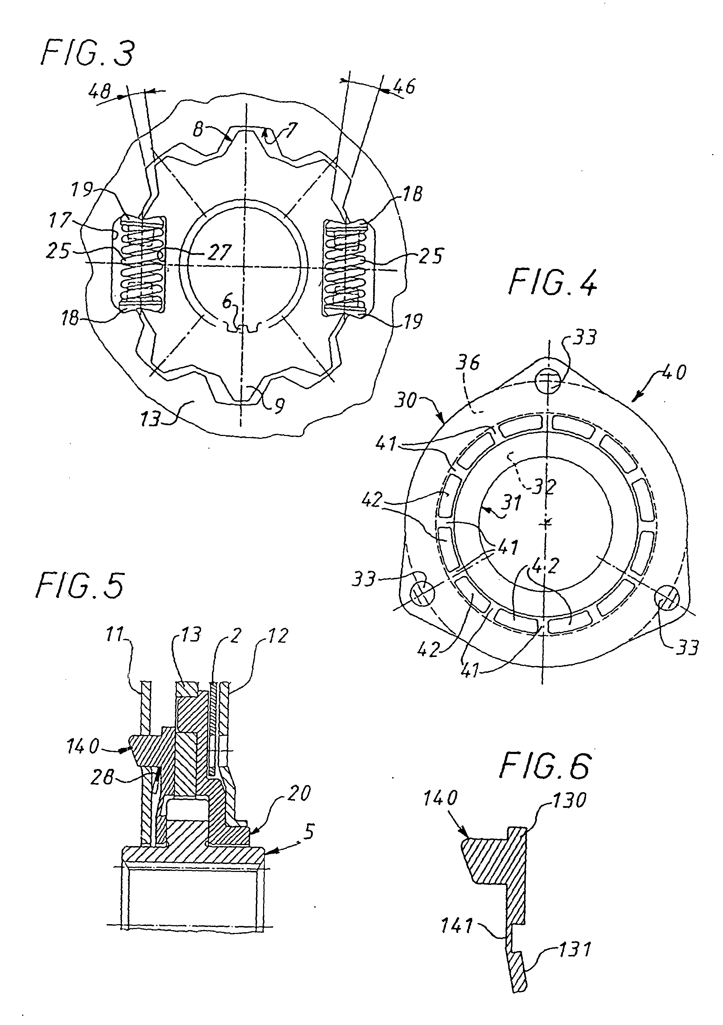

Selon l'invention, les rondelles de frottement 30 et 31 sont reliées par des bras radiaux 41 souples axialement, séparés les uns des autres par des ouvertures circonférentielles 42 visibles sur la figure 4, en sorte que les rondelles de frottement 30 et 31 sont liées en rotation tout en pouvant être déplaçables axialement l'une par rapport à l'autre, compte tenu de la souplesse des bras radiaux 41, prévue minces, selon cette direction ; ainsi une seule pièce de frottement 40, ici en matière moulable, est d'un seul tenant en comprenant les rondelles 30, 31 et les bras radiaux 41 la souplesse dans le sens axial des bras radiaux 41 permet de charger axialement les rondelles 30 et 31 indépendamment l'une de l'autre par les rondelles Belleville distinctes 28 et 45.

L'invention permet de simplifier la fabrication et le montage de l'ensemble ; en particulier, il n'est pas nécessaire de prévoir, comme c'était le cas jusqu'ici, des moyens d'entraînement en rotation de la rondelle de frottement 31 par la rondelle de guidage 11 qui dès lors est une pièce plus simple à réaliser et plus robuste. Avantageusement, la pièce 40 est en matière synthétique moulable, telle que de la matière plastique ; ainsi, la rondelle 31 présente à sa périphérie interne, venu de moulage, un bourrelet permettant de centrer la rondelle Belleville 45.

Le fonctionnement du dispositif amortisseur de torsion découle de la description qui précède.

Selon l'exemple représenté, comme le montrent les figures 3 et 4, au montage un jeu circonférentiel existe, dans les deux sens de rotation, entre les cannelures 7 et 8, respectivement du voile 13 et du moyeu 5 : le jeu 46 correspond au sens direct, le voile 13 se déplaçant dans le sens inverse des aiguilles d'une montre en référence à la figure 3 ; le jeu 46 correspond par exemple à une rotation relative voile 13 - moyeu 5 de 9 degrés ; le jeu 48 correspond au sens inverse et a par exemple une amplitude de 5 degrés.

Lorsque les éléments d'entrée 1 et de sortie 2 sont sollicités en rotation l'un par rapport à l'autre, dans une première phase les ressorts de plus faible raideur, ici les ressorts 25, se compriment ; le voile 13 et les rondelles de guidage 11 et 12, solidarisés en rotation par les ressorts de forte raideur 15, se déplacent ensemble en entraînant également la pièce de frottement 40, c'est-à-dire les rondelles de frottement 30 et 31, ainsi que le palier 20 ; ce mouvement est fait avec frottement entre la couronne 35 du palier 20 par sa portée 37 avec le voile 9 du moyeu 5, d'une part, et entre la portée 32 de la seconde rondelle de frottement 31 et le voile de moyeu 9, d'autre part ; cette première phase prend fin après une rotation de 9 degrés, selon l'exemple ci-dessus, de l'équipage mobile par rapport au moyeu 5 ; à la fin de cette première phase, les cannelures internes 7 du voile 13 sont venues au contact des cannelures extérieures 8 du moyeu 5 ; le voile 13 devient donc solidaire en rotation du moyeu 5.

La deuxième phase correspond à l'intervention de l'amortisseur principal : le disque support 2 et les rondelles de guidage 11 et 12 continuent leur rotation par rapport au moyeu 5 en comprimant les ressorts 15, le moyeu 5 retenant le voile 13 de l'amortisseur principal ; le palier 20 est immobilisé par le voile 13 alors que les rondelles de frottement 30 et 31 sont entraînées en rotation par la rondelle de guidage 11 ; au frottement entre les portées cylindriques 21, 22 et entre la rondelle de guidage 12 et la face 38 de la couronne 35 du palier 20, vient s'ajouter le frottement entre les rondelles de frottement 30 et 31, d'une part, et le voile 13 sur la face de portée 36 et le voile 9 du moyeu 5 sur la face 32, d'autre part, respectivement ; cette deuxième phase prend fin lorsque les entretoises 14 viennent coopérer avec les bords des ouvertures 16.

Dans le sens retour, les ressorts 15 se décompriment ; les rondelles de guidage 11 et 12 entraînent avec elles les rondelles de frottement 30 et 31 qui coopèrent en frottement avec les voiles 13 et 9, tandis que la rondelle de guidage 12 coopère en frottement avec le palier 20 ; ces frottements sont maintenus jusqu'à la position où le voile 13 est entraîné par les rondelles de guidage 11 et 12 qrâce aux ressorts 15 ; les ressorts 25 se détendent ensuite, le frottement étant limité à la coopération du voile de moyeu 9 avec, d'un côté, le palier 20 et, de l'autre côté, la rondelle de frottement 31, jusqu'à la position initiale de repos.

Les figures 5 et 6 montrent une variante de pièce de frottement selon l'invention ; selon ces figures, la pièce de frottement 140 comprenant les rondelles de frottement 130 et 131 reliées par des bras radiaux 141 axialement souples et peu épais, est en une matière présentant non seulement les qualités requises pour le frottement mais également une élasticité intrinsèque telle que, étant moulée dans une configuration telle que celle montrée sur la figure 6 où la seconde rondelle de frottement 131 n'est pas dans un plan transversal parallèle à celui dans laquelle s'étend la première rondelle 130, mais forme un angle avec ce plan, en étant conique par exemple ; de la sorte, dans sa position de montage montrée sur la figure 5, les bras 141 sont précontraints et exercent une action élastique axiale d'application de la rondelle 131 sur le voile de moyeu 9 : ainsi, la rondelle Belleville 145 de la version précédente peut être supprimée, ce qui simplifie encore la construction.

Ainsi qu'on l'aura compris, les cannelures des voiles 13, 9 sont délimitées par des dents, ici de forme trapézoïdale. Les dents du voile 13 pénètrent à jeu dans les cannelures du voile de moyeu 9, et vice versa.

Bien entendu, les bras radiaux 41, 141 peuvent être rapprochés les uns des autres, et même ne former qu'un film mince, les ouvertures 42 étant supprimées.

En variante, les rondelles Belleville 28, 45, formant rondelles élastiques à action axiale, peuvent être remplacées par des rondelles élastiques à action axiale du type rondelles ondulées.

Enfin, de manière précitée le préamortisseur peut être implanté axialement entre la rondelle de guidage 12 et le voile 13 et ce radialement en-dessous des ressorts 15. Il peut comporter deux rondelles de guidage secondaires calée en rotation à leur périphérie externe sur le palier 20 en étant placées de part et d'autre d'un voile secondaire engrenant sous jeu avec le moyeu 5.

## Revendications

1. Dispositif amortisseur de torsion disposé entre deux éléments tournants, à savoir un élément d'entrée (1) et un élément de sortie (4), ledit dispositif comprenant, d'une part, un amortisseur principal, ayant des organes élastiques (15) à action circonférentielle, et étant attaqué cinématiquement directement par l'élément d'entrée (1), et, d'autre part, un préamortisseur, ayant des organes élastiques (25) à action circonférentielle, et étant placé directement en amont de l'élément de sortie (4) constitué d'un moyeu (5), dans lequel l'amortisseur principal comporte deux rondelles de guidage (11-12) disposées axialement de part et d'autre d'un voile (13), les organes élastiques (15) à action circonférentielle associés audit amortisseur principal agissant entre les deux rondelles de guidage (11, 12) et le voile (13) qu'elles encadrent, en étant placés dans des logements en regard que présentent les rondelles de guidage (11, 12) et le voile (13), les organes élastiques (25) à action circonférentielle du préamortisseur étant moins raides que ceux de l'amortisseur principal et agissent entre le voile (13) et le moyeu (5), et dans lequel les deux amortisseurs comportent chacun un dispositif de frottement à action axiale associé à leurs organes élastiques (15,25) respectifs, ledit voile (13) présentant à sa périphérie interne des cannelures internes (7) engrenant avec jeu circonférentiel avec des cannelures extérieures (8) prévues à la périphérie externe d'un voile de moyeu (9) que présente le moyeu (5) à sa périphérie externe, lesdits dispositifs de frottement comportant une seule pièce (40, 140) comprenant une première rondelle de frottement (30, 130) entourant une seconde rondelle de frottement (31, 131), caractérisé par le fait que les première (30, 130) et seconde (31, 131) rondelles de frottement sont reliées par des bras radiaux souples axialement (41, 141) en sorte que les rondelles de frottement (30-130, 31-131) sont solidaires en rotation tout en étant déplaçables axialement l'une par rapport à l'autre.

2. Dispositif selon la revendication 1, caractérisé par le fait que la première rondelle de frottement (30-130) est disposée axialement entre une rondelle de guidage (11) et le voile (13), et la seconde rondelle de frottement (31-131) est disposée axialement entre ladite rondelle de guidage (11) et le voile de moyeu (9), les deux rondelles de frottement (30-130, 31-131) étant chacune sollicitées élastiquement vers le voile (13) et le voile de moyeu (9), respectivement.

3. Dispositif selon la revendication 2, caractérisé par le fait que la première rondelle de frottement (30-130) est munie de tétons axiaux (33) logés dans des passages complémentaires (34) de la rondelle de guidage (11) qui lui fait face, et est sollicitée axialement en direction du voile (13) par une rondelle Belleville (28) qui prend appui sur ladite rondelle de guidage (11).

4. Dispositif selon la revendication 3, caractérisé par le fait que la seconde rondelle de frottement (31) est sollicitée axialement en direction du voile de moyeu (9) par une rondelle Belleville (45) qui prend appui sur ladite rondelle de guidage (11).

5. Dispositif selon la revendication 3, caractérisé par le fait que la seconde rondelle de frottement (131) est sollicitée axialement en direction du voile de moyeu (9) par mise en contrainte des bras radiaux (141).

6. Dispositif selon la revendication 5, caractérisé en ce que les rondelles de frottement sont moulées dans une position telle que la seconde rondelle de frottement (131) forme un angle avec le plan transversal de la première rondelle de frottement (130).

7. Dispositif selon l'une des revendications 1 à 6, caractérisé par le fait que la rondelle de guidage (12) placée de l'autre côté du voile (13) par rapport à la pièce (40, 140) unique constituant la première et la seconde rondelle de frottement des dispositifs de frottement est centrée par l'intermédiaire d'un palier (20), une portée cylindrique (21) de la rondelle de guidage (12) coopérant avec une portée cylindrique complémentaire (22) que présente le palier (20) et qui entoure le moyeu (5).

8. Dispositif selon la revendication 7, caractérisé par le fait que le palier (20) est muni de tétons axiaux (23) logés dans des passages complémentaires (24) de ladite rondelle de guidage (12) et comporte une face de portée annulaire (26) prenant appui sur le voile (13).

9. Dispositif selon l'une quelconque des revendications 1 à 8, caractérisé par le fait que les bras radiaux (41, 141) sont séparés par des ouvertures circonférentielles (42).

10. Dispositif selon l'une quelconque des revendications 1 à 9, caractérisé en ce que les bras (41, 141) sont rapprochés les uns des autres pour ne former qu'un film mince.

11. Dispositif selon l'une quelconque des revendication 1 à 10, caractérisé en ce que les organes élastiques (25) du préamortisseur sont placés dans des échancrures (17, 27) radialement en regard que présentent ledit voile (13) et le dit moyeu (5) respectivement à leur périphérie interne et externe.

12. Dispositif selon l'une quelconque des revendications 1 à 10, caractérisé en ce que les organes élastiques du préamortisseur sont placés de l'autre côté du voile (13) par rapport à la pièce unique (40, 140) comportant les première (30, 130) et seconde (41, 144) rondelles de frottement.

## Claims

1. A torsion damping device disposed between two rotating elements, namely an input element (1) and an output element (4), the said device comprising, firstly, a main damper having circumferentially acting resilient members (15) and being acted on kinematically and directly by the input element (1), and secondly, a predamper having circumferentially acting resilient members (25) and being placed directly upstream of the output element (4) consisting of a hub (5), wherein the main damper includes two guide rings (11 - 12) disposed axially on either side of a damper plate (13), the circumferentially acting resilient members (15), associated with the said main damper acting between the two guide rings (11, 12) and the damper plate (13) which they flank, being located in facing housings formed in the guide rings (11, 12) and damper plate (13), wherein the circumferentially acting resilient members (25) of the predamper are less stiff than those of the main damper and act between the damper plate (13) and hub (5), and wherein each of the two dampers includes an axially acting friction device associated with its respective resilient members (15, 25), the said damper plate (13) having at its inner periphery internal splines (7) meshing, with a circumferential clearance, with external splines (8) formed on the outer periphery of a hub plate (9) on the outer periphery of the hub (5), the said friction devices consisting of a single member (14, 140) which comprises a first friction ring (30, 130) surrounding a second friction ring (31, 131), characterised by the fact that the first friction ring (30, 130) and the second friction ring (31, 131) are connected together by means of axially flexible radial arms (41, 141), so that the friction rings (30 - 130, 31 - 131) are fixed together in rotation while being displaceable axially with respect to each other.

2. A device according to Claim 1, characterised by the fact that the first friction ring (30 - 130) is disposed axially between one guide ring (11) and the damper plate (13), while the second friction ring (31 - 131) is disposed axially between the said guide ring (11) and the hub plate (9), with each of the two friction rings (30 - 130, 31 - 131) being biased axially towards the damper plate (13) and the hub plate (9) respectively.

3. A device according to Claim 2, characterised by the fact that the first friction ring (30 - 130) is provided with axial fingers (33) lodged in complementary passages (34) of the guide ring (11) that faces it, and is biased axially towards the damper plate (13) by a Belleville ring (28) which bears on the said guide ring (11).

4. A device according to Claim 3, characterised by the fact that the second friction ring (31) is biased axially towards the hub plate (9) by a Belleville ring (45) which bears on the said guide ring (11).

5. A device according to Claim 3, characterised by the fact that the second friction ring (131) is biased axially towards the hub plate (9) by prestressing of the radial arms (141).

6. A device according to Claim 5, characterised in that the friction rings are moulded in a position such that the second friction ring (131) defines an angle with the transverse plane of the first friction ring (130).

7. A device according to one of Claims 1 to 6, characterised by the fact that the guide ring (12) which is located on the other side of the damper plate (13), with respect to the single member (40, 140) that constitutes the first and second friction ring of the friction devices, is centred by means of an interposed bearing (20), with a cylindrical surface (21) of the guide ring (12) cooperating with a complementary cylindrical surface (22) which is defined by the bearing (20) and which surrounds the hub (5).

8. A device according to Claim 7, characterised by the fact that the bearing (20) is formed with axial fingers (23) lodged in complementary passages (24) of the said guide ring (12), and includes an annular engagement face (26) engaging on the damper plate (13).

9. A device according to any one of Claims 1 to 8, characterised by the fact that the radial arms (41, 141) are separated by circumferential openings (42).

10. A device according to any one of Claims 1 to 9, characterised in that the arms (41, 141) are close enough to each other to define only a thin film.

11. A device according to any one of Claims 1 to 10, characterised in that the resilient members (25) of the predamper are located in notches (17, 27) in radial facing relationship, formed in the said damper plate (13) and the said hub (5) respectively at their inner and outer periphery.

12. A device according to any one of Claims 1 to 10, characterised in that the resilient members of the predamper are placed on the other side of the damper plate (13) with respect to the single member (40, 140) that comprises the first friction ring (30, 130) and the second friction ring (41, 144).

## Patentansprüche

1. Torsionsdämpfervorrichtung, die zwischen zwei umlaufenden Elementen angeordnet ist, und zwar zwischen einem Eingangselement (1) und einem Ausgangselement (4), wobei die besagte Vorrichtung einerseits einen Hauptdämpfer, der umfangsmäßig wirksame elastische Organe (15) besitzt und auf den das Eingangselement (1) kinematisch direkt einwirkt, und andererseits einen Vordämpfer umfaßt, der umfangsmäßig wirksame elastische Organe (25) besitzt und direkt vor dem aus einer Nabe (5) gebildeten Ausgangselement (4) angeordnet ist, wobei der Hauptdämpfer zwei axial beiderseits einer Zwischenscheibe (13) angeordnete Führungsscheiben (11-12) umfaßt, wobei die zu dem besagten Hauptdämpfer gehörenden umfangsmäßig wirksamen elastischen Organe (15) zwischen den beiden Führungsscheiben (11, 12) und der Zwischenscheibe (13), die sie umgeben, wirken, wobei sie in gegenüberliegenden Aufnahmen angeordnet sind, die die Führungsscheiben (11-12) und die Zwischenscheibe (13) aufweisen, wobei die umfangsmäßig wirksamen elastischen Organe (25) des Vordämpfers weniger steif als diejenigen des Hauptdämpfers sind und zwischen der Zwischenscheibe (13) und der Nabe (5) wirken, und wobei die beiden Dämpfer jeweils eine axial wirksame Reibungsvorrichtung umfassen, die mit ihren jeweiligen elastischen Organen (15, 25) verbunden ist, wobei die besagte Zwischenscheibe (13) an ihrem inneren Umfang Innennuten (7) aufweist, die mit Umfangsspiel an Außennuten (8) eingreifen, die am äußeren Umfang einer Nabenscheibe (9) eingreifen, die die Nabe (5) an ihrem äußeren Umfang aufweist, wobei die Reibungsvorrichtungen ein einziges Teil (40, 140) umfassen, das eine erste Reibscheibe (30 130) enthält, die eine zweite Reibscheibe (31, 131) umgibt,
**dadurch gekennzeichnet,**
daß die ersten (30, 130) und zweiten (31, 131) Reibscheiben durch axial biegsame radiale Arme (41, 141) derart verbunden sind, daß die Reibscheiben (30-130, 31-131) drehfest verbunden und im Verhältnis zueinander axial verschiebbar sind.

2. Vorrichtung nach Anspruch 1, **dadurch gekennzeichnet**, daß die erste Reibscheibe (30-130) axial zwischen einer Führungsscheibe (11) und der Zwischenscheibe (13) angeordnet ist und die zweite Reibscheibe (31-131) axial zwischen der besagten Führungsscheibe (11) und der Nabenscheibe (9) angeordnet ist, wobei die beiden Reibscheiben (30-130, 31-131) jeweils elastisch zur Zwischenscheibe (13) bzw. zur Nabenscheibe (9) beaufschlagt werden.

3. Vorrichtung nach Anspruch 2, **dadurch gekennzeichnet**, daß die erste Reibscheibe (30-130) mit axialen Zapfen (33) versehen ist, die in formschlüssigen Durchgängen (34) der ihr gegenüberliegenden Führungsscheibe (11) aufgenommen sind, und durch eine gewölbte Federscheibe (28), die an der besagten Führungsscheibe (11) zur Anlage kommt, axial in Richtung der Zwischenscheibe (13) beaufschlagt wird.

4. Vorrichtung nach Anspruch 3, **dadurch gekennzeichnet** , daß die zweite Reibscheibe (31) axial in Richtung der Nabenscheibe (9) durch eine gewölbte Federscheibe (45) beaufschlagt wird, die an der besagten Führungsscheibe (11) zur Anlage kommt.

5. Vorrichtung nach Anspruch 3, **dadurch gekennzeichnet**, daß die zweite Reibscheibe (31) durch die Spannung der radialen Arme (141) axial in Richtung der Nabenscheibe (9) beaufschlagt wird.

6. Vorrichtung nach Anspruch 5, **dadurch gekennzeichnet**, daß die Reibscheiben in einer Position geformt sind, die so beschaffen ist, daß die zweite Reibscheibe 131 einen Winkel mit der Querebene der ersten Reibscheibe (130) bildet.

7. Vorrichtung nach einem der Ansprüche 1 bis 6, **dadurch gekennzeichnet**, daß die Führungsscheibe (12), die, bezogen auf das einzige Teil (40, 140), das die erste und die zweite Reibscheibe der Reibungsvorrichtungen bildet, auf der anderen Seite der Zwischenscheibe angeordnet ist, über ein Lager (20) zentriert wird, wobei eine zylindrische Sitzfläche (21) der Führungsscheibe (22) mit einer formschlüssigen Sitzfläche (22) zusammenwirkt, die das Lager (20) aufweist und die die Nabe (5) umgibt.

8. Vorrichtung nach Anspruch 7, **dadurch gekennzeichnet**, daß das Lager (20) mit axialen Zapfen (23) versehen ist, die in formschlüssigen Durchgängen (24) der besagten Führungsscheibe (12) aufgenommen sind, und eine ringförmige Auflagefläche (26) umfaßt, die an der Zwischenscheibe (13) zur Anlage kommt.

9. Vorrichtung nach einem der Ansprüche 1 bis 8, **dadurch gekennzeichnet**, daß die radialen Arme (41, 141) durch Umfangsöffnungen (42) getrennt sind.

10. Vorrichtung nach einem der Ansprüche 1 bis 9, **dadurch gekennzeichnet**, daß die Arme (41, 141) aneinander angenähert sind, um nur eine dünne Folie zu bilden.

11. Vorrichtung nach einem der Ansprüche 1 bis 10, **dadurch gekennzeichnet**, daß die elastischen Organe (25) des Vordämpfers in radial gegenüberliegenden Aussparungen (17, 27) angeordnet sind, die die besagte Zwischenscheibe (13) und die besagte Nabe (5) an ihrem inneren bzw. äußeren Umfang aufweisen.

12. Vorrichtung nach einem der Ansprüche 1 bis 10, **dadurch gekennzeichnet**, daß die elastischen Organe des Vordämpfers, bezogen auf das einzige Teil (40, 140), das die ersten (30, 130) und zweiten (41, 144) Reibscheiben umfaßt, auf der anderen Seite der Zwischenscheibe (13) angeordnet sind.
